# EUROPEAN PATENT SPECIFICATION

(11) **EP 4 422 159 B1**
(45) Date of publication and mention of the grant of the patent: **25.06.2025**
(21) Application number: 23196486.7
(22) Date of filing: 11.09.2023
(51) Int. Cl.: H04N 1/00, G06F 3/12

(54) **INFORMATION PROCESSING SYSTEM AND PROGRAM**
INFORMATIONSVERARBEITUNGSSYSTEM UND -PROGRAMM
SYSTÈME ET PROGRAMME DE TRAITEMENT D'INFORMATIONS

(30) Priority: 27.02.2023 JP 2023028570; 27.02.2023 JP 2023028575
(43) Date of publication of application: 28.08.2024
(73) Proprietor: Fujifilm Business Innovation Corp., Tokyo 107-0052 (JP)
(72) Inventor: TANAKA, Yuki, Yokohama, 220-8668 (JP); MIYAMORI, Shinya, Yokohama, 220-8668 (JP); SUGI, Shinsuke, Yokohama, 220-8668 (JP); OKI, Tomoya, Yokohama, 220-8668 (JP)
(74) Representative: Meissner Bolte Partnerschaft mbB

(56) References cited:
- JP-A- 2012 135 902
- JP-A- 2020 019 206
- US-A1- 2020 045 185

## Description

### Background

### (i) Technical Field

The present disclosure relates to an information processing system and a program.

### (ii) Related Art

For example, Japanese Unexamined Patent Application Publication No. 2015-167302 discloses a configuration including an analysis means for analyzing image features of each of the pages included in a job upon image formation, a saving means for associating and saving the image features on a page-by-page basis, a means for accepting from a user, selection of a page included in a job for which an abnormality is occurring in an output image as a result of image processing, a selection means for selecting one or more charts from plural diagnostic charts by using image features associated with the selected page, an output means for outputting the selected charts, a reading means for accepting from the user, whether an abnormality is occurring in output images of the output charts, and reading an output image of a chart in which the abnormality is determined to be occurring, and a transmission means for transmitting the read image of the chart to a server.

For example, Japanese Unexamined Patent Application Publication No. 2005-275406 discloses a configuration of graphically displaying a hierarchical representation of system components and modular add-on components, detecting the modular components coupled to a system, requesting and receiving the electrical control topology and fault status of each coupled modular component, and dynamically integrating the electrical control topology and fault status of each coupled modular component into the graphical display.

US 2020/045185 is prior art which describes an image data generation apparatus including circuitry configured to refer to image processing association information in which a plurality of image defect types is associated with a plurality of different image processing, respectively; apply, to image data, image processing selected from the plurality of different image processing in accordance with an image defect type included in the image data; and generate processed image data from the image data.

JP 2020 019206 is prior art discussing an information processing device, an information processing system and a failure diagnosing method which allow a user to visually perform determination of whether or not an allowance for an abnormality of image formation is possible or not. This prior art information processing device comprises: an abnormality specifying part that specifies one or more abnormal image portions, which are abnormal portions of target image data, which is image data in which an image forming product, whose image is formed by an image forming device, is read by an image reading device; a limit sample specifying part that specifies image data on a limit sample corresponding to an abnormal image assortment, which is an assortment of an abnormality of the abnormal image portion; a display control part that makes a display part display the target image data together with the image data on the limit sample specified by the limit sample specifying part; an allowance confirming part that confirms whether or not the abnormal image part can be allowed, following operation input to an operation part; and a result display control part that makes the display part display the abnormal image portion confirmed not to be allowed by the allowance confirming part and a method for dealing with the abnormality of the abnormal image portion

### Summary

There may be a case where diagnostics about an image formed by an image forming apparatus is performed for each of the predetermined diagnostic items and a diagnostic result is presented to the user for each of the diagnostic items.

When, for example, plural images based on which diagnostics is performed are present, plural diagnostic results are obtained for a certain one diagnostic item, and the plural diagnostic results are presented to the user as is, the user has difficulty in identifying a diagnostic result about the one diagnostic item.

Accordingly, it is a first object of the present disclosure to, when plural diagnostic results are obtained for a diagnostic item, allow a diagnostic result to be easily identified compared to a case where the plural diagnostic results are presented as is.

Further, when diagnostic results that are results of image quality diagnostics about an image are obtained for plural diagnostic items and one malfunctioning portion is indicated for each of the plural diagnostic items, measures to be taken by the user for the diagnostic results are limited.

Accordingly, it is a second object of the present disclosure to provide a wide choice of measures available to the user compared to a case where one malfunctioning portion is indicated for each of the diagnostic items.

According to a first aspect of the present disclosure, there is provided an information processing system according to claim 1. Preferred aspects are given in the dependent claims.

According to the first aspect of the present disclosure, when plural diagnostic results are obtained for a diagnostic item, a diagnostic result can be easily identified compared to a case where the plural diagnostic results are presented as is.

### Brief Description of the Drawings

Exemplary embodiments of the present disclosure will be described in detail based on the following figures, wherein:
Fig. 1 is a diagram illustrating an example of a diagnostic system;
Fig. 2 is a diagram illustrating an example hardware configuration of a server apparatus and an information processing unit provided in an image forming apparatus;
Fig. 3 is a diagram for explaining the image forming apparatus;
Fig. 4 is a block diagram for explaining a functional configuration of a central processing unit (CPU) of the server apparatus according to a first exemplary embodiment;
Figs. 5A to 5D are diagrams for explaining example chart sheets that are analysis targets, where Fig. 5A illustrates a chart sheet CP1, Fig. 5B illustrates a chart sheet CP2, Fig. 5C illustrates a chart sheet CP3, and Fig. 5D illustrates a chart sheet CP4;
Fig. 6 is a diagnostic item table for explaining diagnostic items for each of the chart sheets that are analysis targets;
Fig. 7 is a flowchart for explaining an example processing procedure in the server apparatus;
Figs. 8A and 8B are diagrams for explaining a first specific example, where Fig. 8A is a table that is a part of the diagnostic item table illustrated in Fig. 6 and Fig. 8B is a table for explaining diagnostic items for which a generation screen showing diagnostic results is generated;
Figs. 9A and 9B are diagrams for explaining the first specific example, where Fig. 9A is a diagram illustrating analysis results and Fig. 9B is a diagram for explaining a generation screen displayed on a display device of a user terminal;
Figs. 10A and 10B are diagrams for explaining a second specific example, where Fig. 10A is a table that is a part of the diagnostic item table illustrated in Fig. 6 and Fig. 10B is a table for explaining diagnostic items for which a generation screen showing diagnostic results is generated;
Figs. 11A and 11B are diagrams for explaining a third specific example, where Fig. 11A is a table that is a part of the diagnostic item table illustrated in Fig. 6 and Fig. 11B is a table for explaining diagnostic items for which diagnostic results are displayed;
Fig. 12 illustrates a diagnostic item table in a fourth specific example;
Figs. 13A and 13B are diagrams for explaining the fourth specific example, where Fig. 13A is a table for explaining diagnostic items for which a generation screen showing diagnostic results is generated and Fig. 13B is a diagram for explaining the generation screen displayed on the display device of the user terminal;
Figs. 14A and 14B are diagrams for explaining a fifth specific example, where Fig. 14A is a diagram illustrating analysis results and Fig. 14B is a diagram for explaining a generation screen displayed on the display device of the user terminal;
Fig. 15 is a block diagram for explaining a functional configuration of the CPU of the server apparatus according to a second exemplary embodiment not forming part of the claimed invention;
Fig. 16 is a diagram for explaining a first generation screen;
Fig. 17 is a diagram for explaining a second generation screen in a first screen transition example;
Fig. 18 is a diagram for explaining a third generation screen in the first screen transition example;
Fig. 19 is a diagram for explaining the second generation screen in a second screen transition example;
Fig. 20 is a diagram for explaining the third generation screen in the second screen transition example; and
Fig. 21 is a diagram for explaining a modification of the second generation screen.

### Detailed Description

Hereinafter, exemplary embodiments of the present disclosure will be described with reference to the drawings.

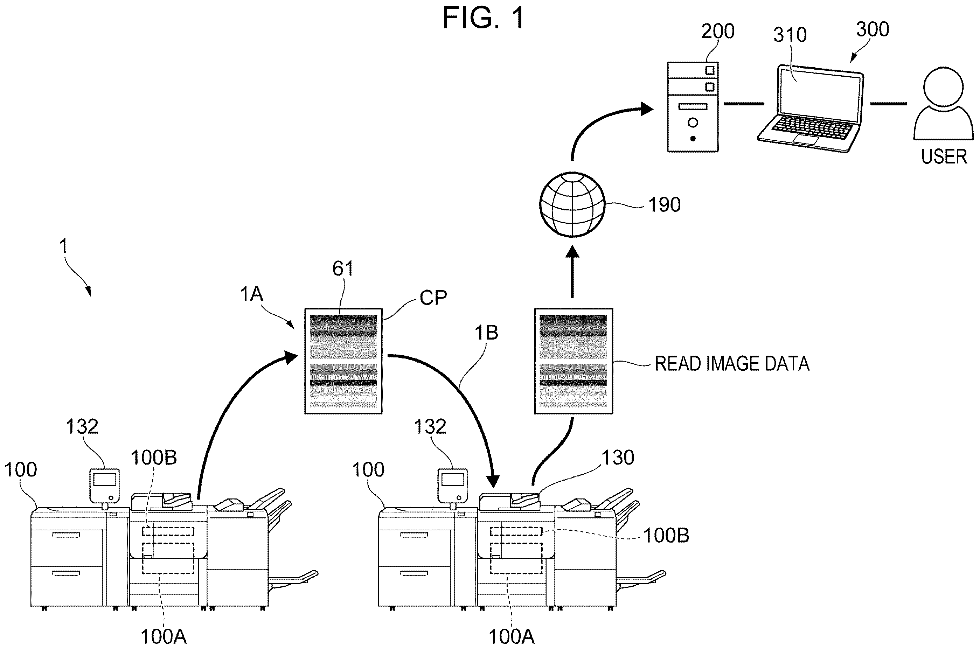

Fig. 1 is a diagram illustrating an example of a diagnostic system 1.

The diagnostic system 1 of the present exemplary embodiments includes plural image forming apparatuses 100 and a server apparatus 200 that is connected to each of the plural image forming apparatuses 100 via a communication line 190. In the present exemplary embodiments, the server apparatus 200, which is an example of an information processing system, performs diagnostics on each of the image forming apparatuses 100.

The diagnostic system 1 of the present exemplary embodiments further includes a user terminal 300 that is connected to the server apparatus 200 and accepts operations from the user.

Note that Fig. 1 illustrates two image forming apparatuses 100 among the plural image forming apparatuses 100.

The user terminal 300 is provided with a display device 310. The user terminal 300 is implemented as a computer. The user terminal 300 is, for example, a personal computer (PC), a smartphone, or a tablet terminal.

The image forming apparatus 100 is provided with an image forming unit 100A, which is an example of an image former, that forms an image on a sheet, which is an example of a recording medium.

The image forming unit 100A forms an image on a sheet with, for example, an inkjet system or an electrophotographic system. The image forming unit 100A may form an image on a sheet with any other system instead of an inkjet system or an electrophotographic system.

The image forming apparatus 100 is further provided with an information processing unit 100B. The information processing unit 100B performs various processes for the image forming apparatus 100.

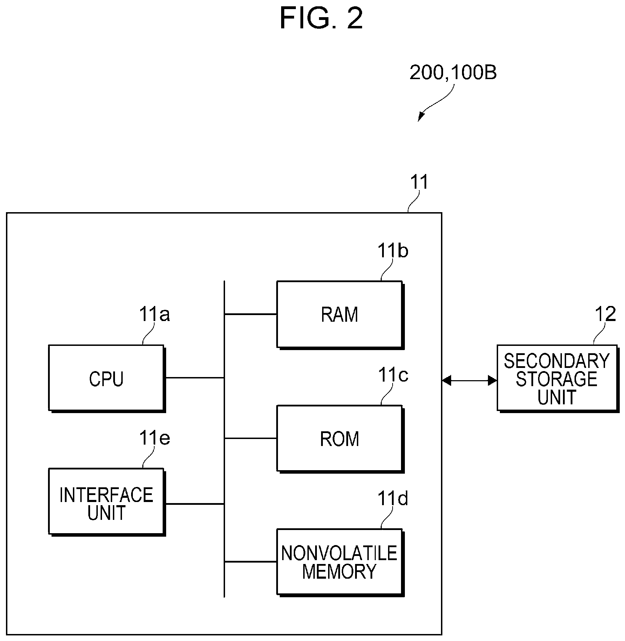

Fig. 2 is a diagram illustrating an example hardware configuration of the server apparatus 200 and the information processing unit 100B provided in the image forming apparatus 100. The server apparatus 200 and the information processing unit 100B provided in the image forming apparatus 100 are each implemented as a computer.

Each of the server apparatus 200 and the information processing unit 100B includes an arithmetic processing unit 11 that performs digital arithmetic processing in accordance with a program and a secondary storage unit 12 that stores information.

The secondary storage unit 12 is implemented as an already available information storage device, such as a hard disk drive (HDD), a semiconductor memory, or a magnetic tape.

The arithmetic processing unit 11 includes a CPU 11a, which is an example of a processor.

The arithmetic processing unit 11 further includes a random access memory (RAM) 11b that is used as, for example, a work memory for the CPU 11a and a read-only memory (ROM) 11c that stores, for example, a program executed by the CPU 11a.

The arithmetic processing unit 11 further includes a nonvolatile memory 11d that is a rewritable memory and that can retain data even in a case of interruption of power supply and an interface unit 11e that controls a communication unit and other units connected to the arithmetic processing unit 11.

The nonvolatile memory 11d is formed of, for example, a static random access memory (SRAM) or a flash memory that is battery-backed up. The secondary storage unit 12 stores a program executed by the arithmetic processing unit 11 in addition to files and so on.

In the present exemplary embodiments, the arithmetic processing unit 11 reads the program stored in the ROM 11c or the secondary storage unit 12 to thereby perform processes.

The program executed by the CPU 11a can be stored in a computer-readable recording medium, such as a magnetic recording medium (a magnetic tape, a magnetic disk, or the like), an optical recording medium (an optical disc or the like), a magneto-optical recording medium, or a semiconductor memory, and provided to the server apparatus 200 or the information processing unit 100B from the computer-readable recording medium. The program executed by the CPU 11a may be provided to the server apparatus 200 or the information processing unit 100B by communication over, for example, the Internet.

In the specification, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

The term "processor" is broad enough to encompass one processor or plural processors in collaboration which are located physically apart from each other but may work cooperatively. The order of operations of the processor is not limited to one described in the present exemplary embodiments, and may be changed.

Among processes described below, processes performed by the image forming apparatus 100 are performed by the CPU 11a, which is an example of the processor, included in the image forming apparatus 100.

Among the processes described below, processes performed by the server apparatus 200 are performed by the CPU 11a, which is an example of the processor, included in the server apparatus 200.

Among the processes described below, processes related to diagnostics on the image forming apparatus 100 are performed by the server apparatus 200, which is an example of the information processing system. The information processing system that performs the processes related to diagnostics on the image forming apparatus 100 may be implemented as one apparatus, such as one server apparatus 200, or may be implemented as plural apparatuses.

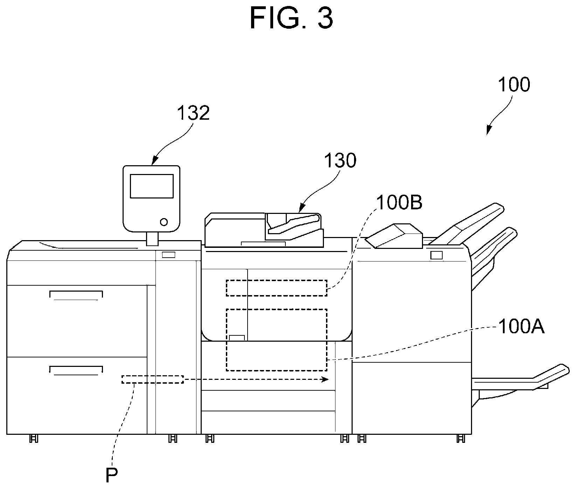

Fig. 3 is a diagram for explaining the image forming apparatus 100.

In the present exemplary embodiments, the image forming apparatus 100 is provided with the image forming unit 100A that forms an image on a sheet P, which is an example of the recording medium, as described above.

In the present exemplary embodiments, when the sheet P passes the image forming unit 100A, the sheet P passes the image forming unit 100A with one side of the sheet P facing the image forming unit 100A.

The image forming apparatus 100 is further provided with an image reading device 130, which is an example of an image reader, that reads an image formed on a recording medium, such as the sheet P.

The image reading device 130 is a scanner that has a function of conveying the sheet P. The image reading device 130 includes a light source that emits light for illuminating the sheet P and a light receiving unit, such as a charge-coupled device (CCD), that receives reflected light from the sheet P. In the present exemplary embodiments, based on the reflected light received by the light receiving unit, read image data described below is generated.

In the image reading device 130, an image reading position is set in advance, and the image reading device 130 reads an image of a portion, of each of the sheets P conveyed one after another, that is positioned at the reading position.

The image forming apparatus 100 has an information transmission function of transmitting information to the server apparatus 200 (see Fig. 1).

In the example illustrated in Fig. 3, the image reading device 130 is provided on the upper part of the image forming apparatus 100. The image reading device 130 reads one after another, sheets (not illustrated) placed by a user. These sheets need not be sheets on which images are formed by the image forming apparatus 100 and may be sheets on which images are formed by another image forming apparatus.

The image reading device 130 need not be placed as illustrated in Fig. 3 and the image reading device 130 may be provided inside the image forming apparatus 100 on the conveyance path of the sheets P.

In this case, the sheets P on which images are formed by the image forming unit 100A pass the image reading device 130 one after another, and the images formed on the respective sheets P are read one after another upon passing.

In the present exemplary embodiments, the image reading device 130 is provided with a sheet flipping mechanism, with which sheets that are flipped can be sent to the image reading position.

Accordingly, in the present exemplary embodiments, after an image formed on one side of a sheet has been read, the sheet can be flipped and sent again to the reading position, which allows reading of images on the front side and back side of the sheet.

Alternatively, upon reading of an image on a sheet, the sheet may be placed on a document stage (not illustrated) formed of sheet glass or the like and the sheet placed on the document stage may be read.

Each of the image forming apparatuses 100 is provided with an operation accepting unit 132 that accepts operations from users. The operation accepting unit 132 is formed of a touch panel. The operation accepting unit 132 displays information to users and accepts operations performed by users.

Note that display of information to users and acceptance of user operations need not be performed by one operation accepting unit 132 as in the present exemplary embodiments, and an operation accepting unit and an information display unit may be separately provided.

In the present exemplary embodiments, upon diagnostics performed on the image forming apparatus 100 (see Fig. 1), the image forming unit 100A is first operated to form a chart image 61 on a sheet. Accordingly, as indicated by reference numeral 1A, a chart sheet CP that is a sheet on which the chart image 61, which is an example of a diagnostic image, is formed is generated.

The chart image 61 is an image used in diagnostics on the image forming apparatus 100, and the chart sheet CP that is a sheet on which the chart image 61 used in this diagnostics is formed is generated in the present exemplary embodiments.

After the chart sheet CP has been generated, the chart sheet CP is placed on the image reading device 130 as indicated by reference numeral 1B in Fig. 1. The image reading device 130 reads the chart sheet CP on which the chart image 61 is formed.

Accordingly, read image data obtained by reading the chart sheet CP is generated.

In the present exemplary embodiments, this read image data is transmitted to the server apparatus 200 and stored on the server apparatus 200. The server apparatus 200 performs diagnostics on the image forming apparatus 100 on the basis of the read image data.

In the present exemplary embodiments, a user who uses the diagnostic system 1 of the present exemplary embodiments, such as a maintenance technician who maintains the image forming apparatus 100, accesses the server apparatus 200 and refers to diagnostic results obtained by the server apparatus 200.

In each of the image forming apparatuses 100, the chart sheet CP is generated and the chart sheet CP is read, and read image data is generated as described above.

The read image data is transmitted to the server apparatus 200. As described above, in the present exemplary embodiments, diagnostics on the image forming apparatus 100 is performed by the server apparatus 200.

A diagnostic process performed by the server apparatus 200 will be described.

In the present exemplary embodiments, the CPU 11a (see Fig. 2), which is an example of the processor, provided in the server apparatus 200 performs diagnostics on the image forming apparatus 100 on the basis of the above-described read image data transmitted from the image forming apparatus 100 and obtains diagnostic results that are the results of diagnostics.

More specifically, the CPU 11a obtains diagnostic results that are the results of diagnostics about the chart image 61, which is an image formed on the chart sheet CP described above, and that are diagnostic results for plural respective diagnostic items.

In the present exemplary embodiments, the plural diagnostic items are determined in advance, and the CPU 11a of the server apparatus 200 analyzes the chart image 61 included in the read image data and obtains diagnostic results for the plural respective diagnostic items.

More specifically, the CPU 11a of the server apparatus 200 obtains a diagnostic result for each of the plural diagnostic items on the basis of, for example, the difference between a reference value determined in advance for each of the plural diagnostic items and a value obtained by analyzing the chart image 61.

As the difference is larger, the CPU 11a of the server apparatus 200 obtains a diagnostic result showing negative evaluation.

Subsequently, the CPU 11a sorts the plural obtained diagnostic results such that the plural diagnostic results are arranged in a predetermined order.

More specifically, when sorting the plural diagnostic results, the CPU 11a sorts the plural diagnostic results such that the plural diagnostic results are arranged, for example, in ascending or descending order of evaluation.

Thereafter, the CPU 11a generates a screen on which the plural diagnostic results are arranged in the predetermined order.

A configuration for, when a diagnostic result indicates that a problem is present, determining whether the problem is caused by the image forming unit 100A (see Fig. 3) that forms an image on a sheet or caused by the image reading device 130 (see Fig. 3) that reads the image on the sheet will now be described. This configuration is implemented by the image reading device 130 of the image forming apparatus 100 and the CPU 11a.

### First Exemplary Embodiment

A functional configuration of the CPU 11a of the server apparatus 200 according to the first exemplary embodiment will now be described.

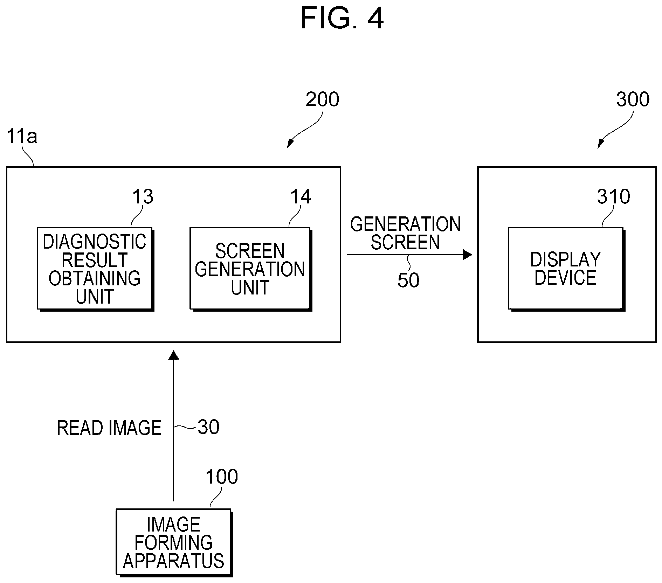

Fig. 4 is a block diagram for explaining the functional configuration of the CPU 11a of the server apparatus 200 according to the first exemplary embodiment and also illustrates the image forming apparatus 100 and the user terminal 300 for convenience of explanation.

As illustrated in Fig. 4, the CPU 11a includes a diagnostic result obtaining unit 13 and a screen generation unit 14.

The diagnostic result obtaining unit 13 obtains diagnostic results that are the results of diagnostics performed on a read image 30 that is transmitted from the image forming apparatus 100. The diagnostics is performed for each of the diagnostic items determined in advance in accordance with the chart image 61 (see Fig. 1) included in the read image 30. Therefore, the diagnostic result obtaining unit 13 obtains a diagnostic result for each of the predetermined diagnostic items and performs a process.

The screen generation unit 14 generates a screen for notifying the user of the obtained diagnostic results. The generated screen, which is a generation screen 50, is transmitted from the server apparatus 200 to the user terminal 300 and displayed on the display device 310 of the user terminal 300 to thereby notify the user of the diagnostic results.

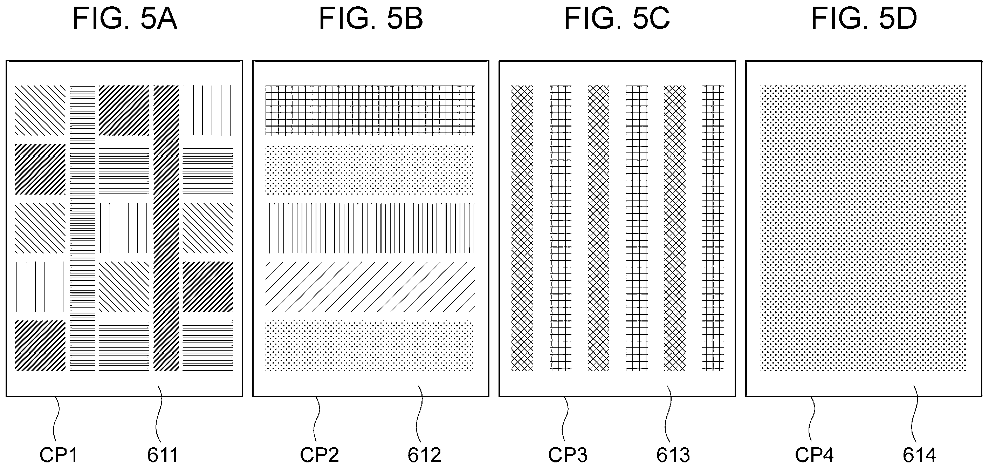

Figs. 5A to 5D are diagrams for explaining examples of the chart sheet CP that are analysis targets, where Fig. 5A illustrates a chart sheet CP1, Fig. 5B illustrates a chart sheet CP2, Fig. 5C illustrates a chart sheet CP3, and Fig. 5D illustrates a chart sheet CP4.

On the chart sheet CP1 illustrated in Fig. 5A, a chart image 611 for diagnosing density is formed. On the chart sheet CP2 illustrated in Fig. 5B, a chart image 612 for diagnosing horizontal unevenness is formed, and on the chart sheet CP3 illustrated in Fig. 5C, a chart image 613 for diagnosing vertical unevenness is formed. On the chart sheet CP4 illustrated in Fig. 5D, a chart image 614 for diagnosing dots/streaks is formed.

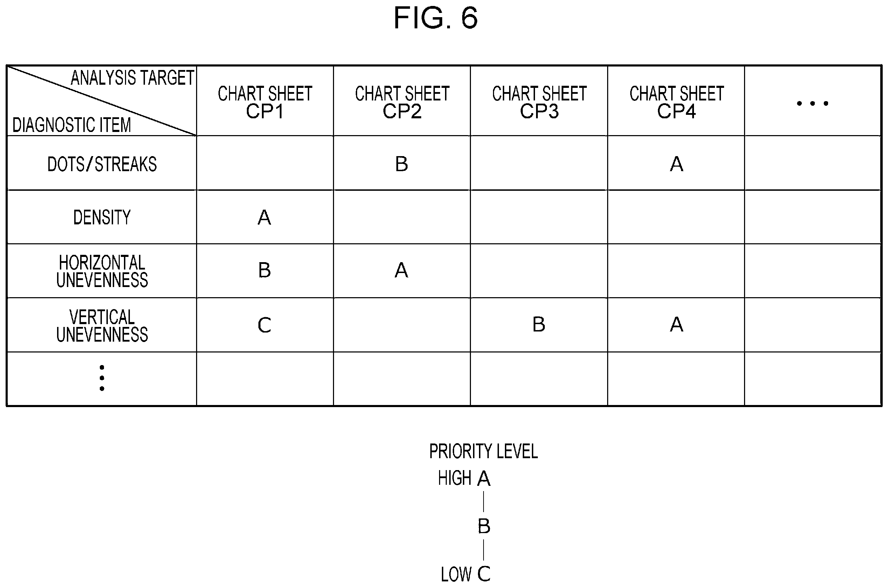

Fig. 6 is a diagnostic item table for explaining diagnostic items for each of the chart sheets CP1 to CP4 (see Figs. 5A to 5D) that are analysis targets. The diagnostic items shown in rows are items related to image quality defects (image defects). The diagnostic items can be regarded as evaluation items.

In the table illustrated in Fig. 6, dots/streaks, density, horizontal unevenness, and vertical unevenness are illustrated as diagnostic items. The diagnostic items for the chart sheet CP1 are density, horizontal unevenness, and vertical unevenness, the diagnostic items for the chart sheet CP2 are dots/streaks and horizontal unevenness, the diagnostic item for the chart sheet CP3 is vertical unevenness, and the diagnostic items for the chart sheet CP4 are dots/streaks and vertical unevenness.

More specifically, priority levels of the respective diagnostic items are determined in advance for each of the chart sheets CP1 to CP4. The priority levels are used to determine how to display a common item when the common item is included in diagnostic items analyzed with one of the chart sheets CP1 to CP4 and in diagnostic items analyzed with another one of the chart sheets CP1 to CP4. In other words, when for at least one diagnostic item among the plural diagnostic items, plural diagnostic results are obtained on the basis of each of the plural chart images 611 to 614 that are different from each other, the priority levels are used to determine whether to display one of the plural diagnostic results or display a diagnostic result obtained on the basis of the plural diagnostic results.

The priority levels described above can be determined in various ways. For example, the priority levels can be determined in advance on the basis of information about the image reading device 130 (see, for example, Fig. 1) that reads the chart images 611 to 614 on the chart sheets CP1 to CP4 or information about the image forming unit 100A (see, for example, Fig. 1) that forms the chart images 611 to 614 on the chart sheets CP1 to CP4. That is, the priority levels are determined in accordance with reliability levels that are based on the performance and so on of the image reading device 130 and the image forming unit 100A. For example, the priority levels are increased for an apparatus having a higher reliability level than for an apparatus having a lower reliability level.

The priority levels can be determined in advance on the basis of information about the number and types of images on which image quality diagnostics is performed. The types are the types of the chart images 611 to 614 described above. The priority levels are determined on the basis of an effect of the number, that is, whether the number is large or small, on the diagnostic items or on the basis of features of each of the chart images 611 to 614, that is, whether each of the chart images 611 to 614 is suitable to the diagnostic items.

There may be a case where each of the priority levels is set as any of the plural classifications set as ranks and a case where each of the priority levels is a value derived by a predetermined arithmetic operation. In Fig. 6, the priority levels are determined for each of the chart sheets CP1 to CP4 as in the former case. This will be described below.

The priority levels in the case of Fig. 6 are in three ranks, that is, "A" that indicates the highest priority level, "C" that indicates the lowest priority level, and "B" that is an intermediate priority level between "A" and "B".

More specifically, among density, horizontal unevenness, and vertical unevenness that are diagnostic items for the chart sheet CP1, density is assigned a high priority level. The other diagnostic items are assigned priority levels, that is, vertical unevenness is assigned a low priority level while horizontal unevenness is assigned an intermediate priority level.

Regarding the chart sheet CP2, among dots/streaks and horizontal unevenness that are diagnostic items, horizontal unevenness is assigned a high priority level while dots/streaks is assigned an intermediate priority level. Regarding the chart sheet CP3, vertical unevenness, which is an only diagnostic item, is assigned an intermediate priority level. Regarding the chart sheet CP4, both dots/streaks and vertical unevenness that are diagnostic items are assigned a high priority level.

As described above, each of the chart sheets CP1 to CP4 might not have the same diagnostic items, might not have a diagnostic item assigned a high priority level, and might not have only one diagnostic item that is assigned a high priority level.

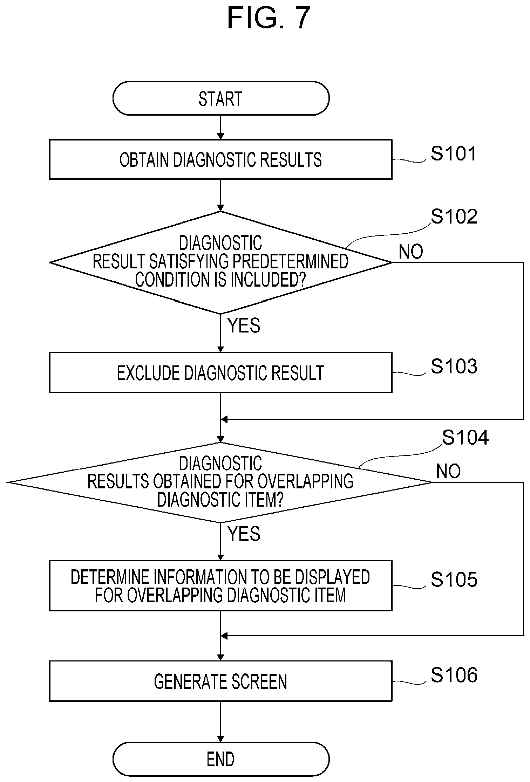

An example processing procedure in the server apparatus 200 will now be described with reference to Fig. 7.

Fig. 7 is a flowchart for explaining the example processing procedure in the server apparatus 200.

In the example processing procedure illustrated in Fig. 7, in response to obtaining a diagnostic result for each of the plural predetermined diagnostic items (step 101), the diagnostic result obtaining unit 13 determines whether a diagnostic result that satisfies a predetermined condition is included in the obtained diagnostic results (step 102). The predetermined condition here is a condition that a diagnostic result is not to be used in determining information to be presented to the user, and examples thereof include a case of a possible measurement error, where the analysis fails or the analysis does not fail but a diagnostic result is substantially low or high.

If a diagnostic result that satisfies the predetermined condition is present (Yes in step 102), the diagnostic result obtaining unit 13 excludes the diagnostic result (step 103) so as not to be used in the subsequent process. If a diagnostic result that satisfies the predetermined condition is not present (No in step 102), the process proceeds to step 104.

Next, the screen generation unit 14 determines whether the obtained diagnostic results include diagnostic results obtained for an overlapping diagnostic item (step 104).

When the plural chart sheets CP1 to CP4 are analyzed and analysis results for an overlapping diagnostic item are obtained (Yes in step 104), the screen generation unit 14 determines information to be displayed for the overlapping diagnostic item (step 105). There may be a case where information to be displayed is determined in accordance with priority levels by using the above-described priority levels and a case where information to be displayed is determined such that, when numerical values are calculated as the analysis results, a diagnostic result having a large numerical value is to be displayed and a diagnostic result having a small numerical value is not to be displayed, without using the priority levels.

In the case of using the priority levels and when each of the priority levels are set as any of the plural predetermined ranks as described above, a form may be employed in which the priority levels are used to identify a chart sheet having the diagnostic item that is assigned a higher rank. In this form, a diagnostic result obtained from the identified chart sheet is used in screen generation, and a diagnostic result obtained from a chart sheet other than the identified chart sheet is not used in screen generation.

In the case of using the priority levels, a form may be employed in which each of the plural ranks indicating priority levels is associated with a predetermined weight, and a numerical value used in screen generation is calculated by using numerical values for the overlapping diagnostic item. In this form, each of the diagnostic results for the overlapping diagnostic item is used in screen generation.

A description of an example of the above-described form will be given while assuming a case where the chart sheet CP1 and the chart sheet CP2 have an overlapping diagnostic item and the diagnostic item is assigned a higher priority level for the chart sheet CP2 than for the chart sheet CP1. When a numerical value A is obtained as a diagnostic result obtained from the chart sheet CP1 and a numerical value B is obtained as a diagnostic result obtained from the chart sheet CP2 for the overlapping diagnostic result, and a ratio based on the priority levels is determined in advance, that is, the chart sheet having a higher priority level is assigned a percentage 70% while the chart sheet having a lower priority level is assigned a percentage 30%, a value calculated by using an expression A × 0.3 + B × 0.7 is used in screen generation.

This ratio can be regarded as weights, and the ratio may be 70 to 30 when the priority levels are different or the ratio may be 50 to 50 when the priority levels are not different.

In other words, control may be employed in which when the priority levels are different, a ratio of 100 to 0 is used as weights and a diagnostic result corresponding to a higher priority level is used in screen generation as is while a diagnostic result corresponding to a lower priority level is not used in screen generation.

In addition to the case where one of the diagnostic results obtained for an overlapping diagnostic item is indicated and the case where a diagnostic result separately obtained by using all of the diagnostic results obtained for an overlapping diagnostic item is indicated as a diagnostic result as described above regardless of whether the priority levels are used, there may be a case where diagnostic results obtained for an overlapping diagnostic item are indicated so as to indicate priority and nonpriority. For example, the diagnostic results are displayed so as to be distinguishable such that a diagnostic result having a larger numerical value as the analysis result is displayed so as to be easily viewable and a diagnostic result having a smaller numerical value as the analysis result is displayed so as to be less viewable. In an example of the display, the diagnostic results are distinguished from each other by size such that one of the diagnostic results is displayed in a large size while the other is displayed in a small size. In other examples of the display, the diagnostic results are distinguished from each other by color such that one of the diagnostic results is displayed in red while the other is displayed in black or the diagnostic results are distinguished from each other by density such that one of the diagnostic results is displayed intensely while the other is displayed light.

A case where step 103 in the flowchart illustrated in Fig. 7 is performed, a diagnostic result that satisfies the predetermined condition is excluded because of, for example, an analysis failure, and the excluded diagnostic result is obtained for an overlapping diagnostic item will be considered. In this case, when the excluded diagnostic result corresponds to a higher priority level, control is employed in which a diagnostic result corresponding to a lower priority level is used in screen generation regardless of the ratio based on the priority levels.

The screen generation unit 14 generates a screen that shows, for the overlapping diagnostic item, the information to be displayed, which is determined in step 105, as a diagnostic result and that shows, for the other diagnostic items, the obtained diagnostic results. The generation screen 50 that has been generated is transmitted to the user terminal 300 and displayed on the display device 310.

Various specific examples will now be described.

First, a first specific example will be described.

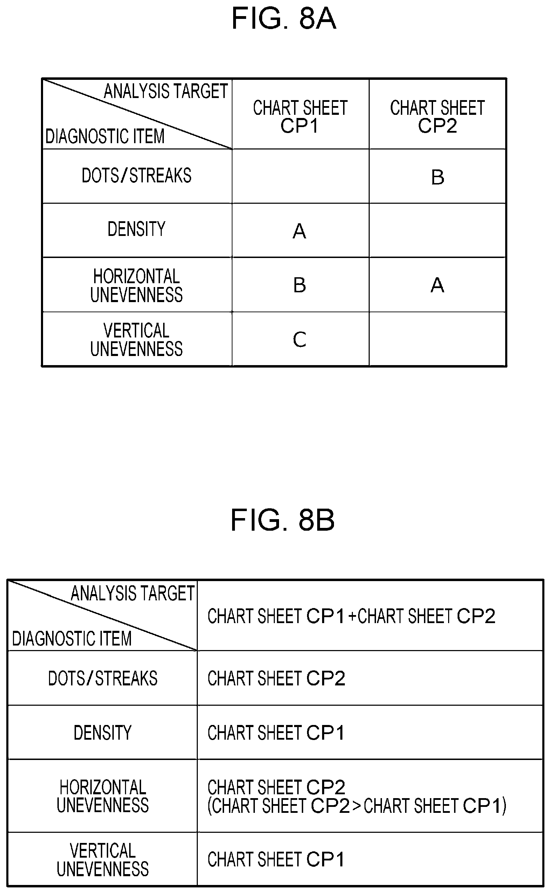

Figs. 8A and 8B are diagrams for explaining the first specific example, where Fig. 8A is a table that is a part of the diagnostic item table illustrated in Fig. 6 and Fig. 8B is a table for explaining diagnostic items for which the generation screen 50 showing diagnostic results is generated.

As illustrated in Fig. 8A, the first specific example is a case where the chart sheet CP1 and the chart sheet CP2 are analysis targets and the diagnostic items are dots/streaks, density, horizontal unevenness, and vertical unevenness. Dots/streaks is assigned "B" for the chart sheet CP2, density is assigned "A" for the chart sheet CP1, and vertical unevenness is assigned "C" for the chart sheet CP1. These diagnostic items are not overlapping diagnostic items, and therefore, diagnostic results obtained for the respective diagnostic items are used as illustrated in Fig. 8B.

In contrast, as illustrated in Fig. 8A, horizontal unevenness is an overlapping diagnostic item for the chart sheet CP1 and the chart sheet CP2.

"B" is assigned for the chart sheet CP1 while "A" is assigned for the chart sheet CP2, and therefore, the priority level of horizontal unevenness is higher for the chart sheet CP2 than for the chart sheet CP1. Therefore, as illustrated in Fig. 8B, for horizontal unevenness, a diagnostic result obtained from the chart sheet CP2 is selected and a diagnostic result obtained from the chart sheet CP1 is not used.

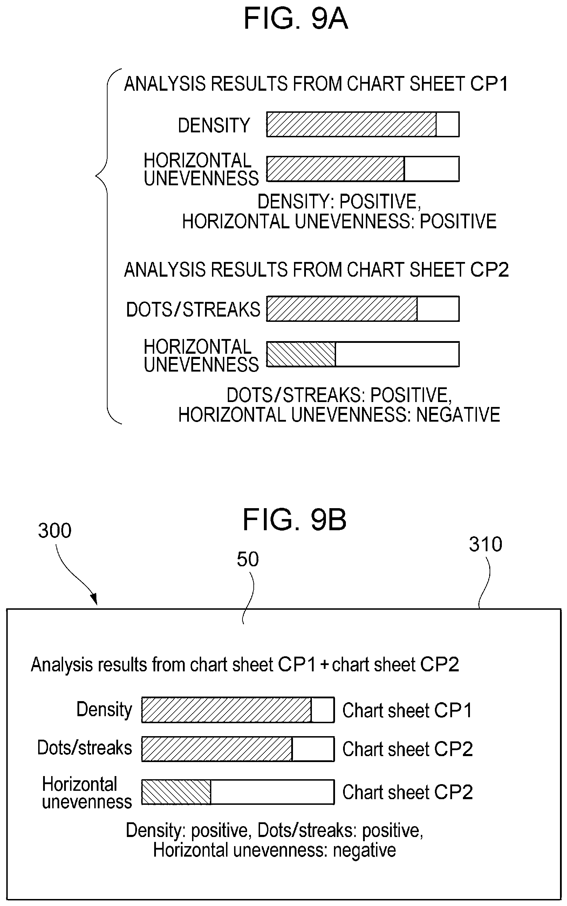

Figs. 9A and 9B are diagrams for explaining the first specific example, where Fig. 9A is a diagram illustrating analysis results and Fig. 9B is a diagram for explaining the generation screen 50 displayed on the display device 310 of the user terminal 300.

As illustrated in Fig. 9A, for each of the diagnostic items of density and horizontal unevenness, the degrees of density and horizontal unevenness are indicated by the lengths of horizontal bars extending from left to right. For the analysis results obtained from the chart sheet CP1, both of the horizontal bars for density and horizontal unevenness extend long toward the right, which indicates that a positive result is obtained for density and horizontal unevenness.

For the analysis results obtained from the chart sheet CP2, the horizontal bar for dots/streaks extends long toward the right while that for horizontal unevenness does not extend long toward the right. This indicates that a positive result is obtained for dots/streaks while a negative result is obtained for horizontal unevenness.

As described above, for horizontal unevenness, which is an overlapping diagnostic item, the priority level for the chart sheet CP2 is higher than that for the chart sheet CP1 (see Figs. 8A and 8B). Therefore, as illustrated in Fig. 9B, for horizontal unevenness, the analysis result obtained from the chart sheet CP2, that is, a negative result for horizontal unevenness, is adopted, and the diagnostic result obtained from the chart sheet CP2 is displayed on the generation screen 50.

For density and dots/streaks, which are not overlapping diagnostic items, the analysis result obtained from the chart sheet CP1 and that obtained from the chart sheet CP2 are adopted and displayed on the generation screen 50.

As illustrated in Fig. 9B, the analysis results obtained from the chart sheet CP1 and the chart sheet CP2 indicate that a positive result is obtained for density and dots/streaks while a negative result is obtained for horizontal unevenness.

More specifically, on the generation screen 50, "chart sheet CP1" and "chart sheet CP2", which are the names of charts for which the priority levels are high, are displayed. That is, the chart sheet CP1 is indicated for density and the chart sheet CP2 is indicated for dots/streaks and horizontal unevenness.

A second specific example will now be described.

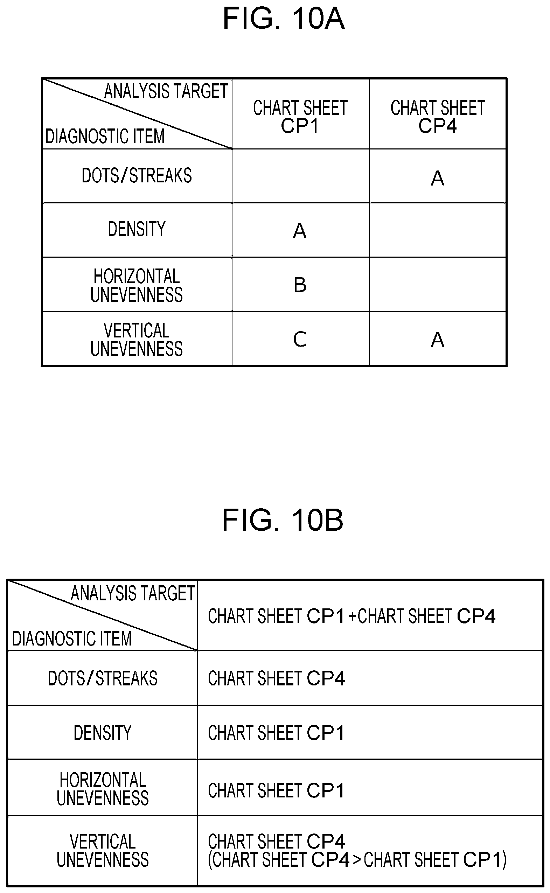

Figs. 10A and 10B are diagrams for explaining the second specific example, where Fig. 10A is a table that is a part of the diagnostic item table illustrated in Fig. 6 and Fig. 10B is a table for explaining diagnostic items for which the generation screen 50 showing diagnostic results is generated.

As illustrated in Fig. 10A, the second specific example is a case where the chart sheet CP1 and the chart sheet CP4 are analysis targets and the diagnostic items are dots/streaks, density, horizontal unevenness, and vertical unevenness. The diagnostic items are the same as those in the first specific example (see Figs. 8A and 8B).

Dots/streaks is assigned "A" for the chart sheet CP4, density is assigned "A" for the chart sheet CP1, and horizontal unevenness is assigned "B" for the chart sheet CP1. These diagnostic items are not overlapping diagnostic items, and therefore, diagnostic results obtained for the respective diagnostic items are used as illustrated in Fig. 10B.

In contrast, as illustrated in Fig. 10A, vertical unevenness is an overlapping diagnostic item for the chart sheet CP1 and the chart sheet CP4.

"C" is assigned for the chart sheet CP1 while "A" is assigned for the chart sheet CP4, and therefore, the priority level of vertical unevenness is higher for the chart sheet CP4 than for the chart sheet CP1. Therefore, as illustrated in Fig. 10B, for vertical unevenness, a diagnostic result obtained from the chart sheet CP4 is selected and a diagnostic result obtained from the chart sheet CP1 is not used.

A third specific example will now be described.

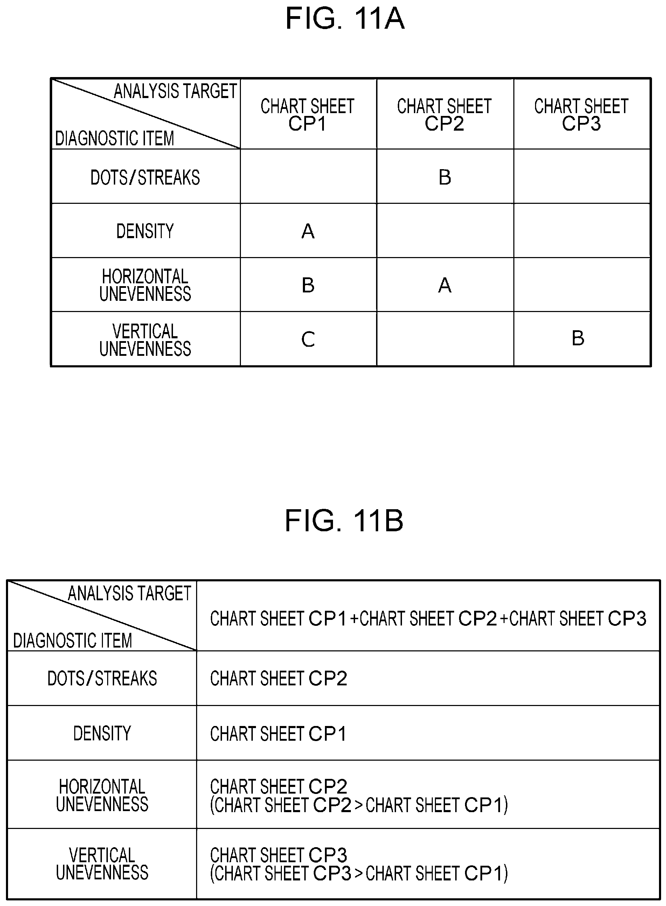

Figs. 11A and 11B are diagrams for explaining the third specific example, where Fig. 11A is a table that is a part of the diagnostic item table illustrated in Fig. 6 and Fig. 11B is a table for explaining diagnostic items for which diagnostic results are displayed.

As illustrated in Fig. 11A, the third specific example is a case where the chart sheet CP1, the chart sheet CP2, and the chart sheet CP3 are analysis targets and the diagnostic items are dots/streaks, density, horizontal unevenness, and vertical unevenness. The diagnostic items are the same as those in the first specific example (see Figs. 8A and 8B) and in the second specific example (see Figs. 10A and 10B).

Dots/streaks is assigned "B" for the chart sheet CP2, and density is assigned "A" for the chart sheet CP1. These diagnostic items are not overlapping diagnostic items, and therefore, diagnostic results obtained for the respective diagnostic items are used as illustrated in Fig. 11B.

In contrast, as illustrated in Fig. 11A, horizontal unevenness is an overlapping diagnostic item for the chart sheet CP1 and the chart sheet CP2. Further, vertical unevenness is an overlapping diagnostic item for the chart sheet CP1 and the chart sheet CP3.

For horizontal unevenness, "B" is assigned for the chart sheet CP1 while "A" is assigned for the chart sheet CP2, and therefore, the priority level of horizontal unevenness is higher for the chart sheet CP2 than for the chart sheet CP1. For vertical unevenness, "C" is assigned for the chart sheet CP1 while "B" is assigned for the chart sheet CP3, and therefore, the priority level of vertical unevenness is higher for the chart sheet CP3 than for the chart sheet CP1.

Therefore, as illustrated in Fig. 11B, for horizontal unevenness, a diagnostic result obtained from the chart sheet CP2 is selected and a diagnostic result obtained from the chart sheet CP1 is not used. For vertical unevenness, a diagnostic result obtained from the chart sheet CP3 is selected and a diagnostic result obtained from the chart sheet CP1 is not used.

A fourth specific example will now be described.

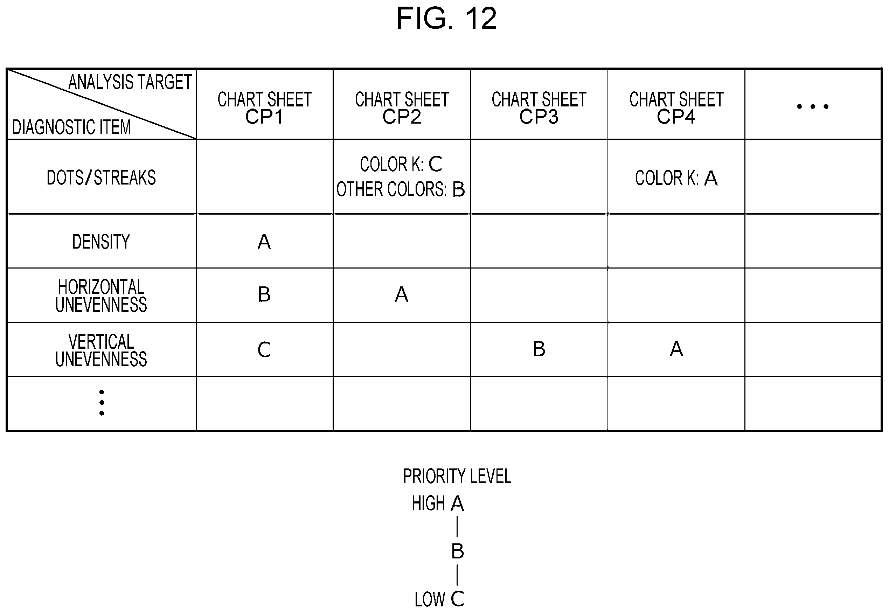

Fig. 12 illustrates a diagnostic item table in the fourth specific example and corresponds to Fig. 6 described above. In Fig. 12, the columns correspond to the chart sheets CP1 to CP4, and the rows correspond to the diagnostic items of dots/streaks, density, horizontal unevenness, and vertical unevenness, which are common to Fig. 6, and therefore, descriptions of portions common to Fig. 6 may be omitted.

In terms of dots/streaks, which is one of the diagnostic items, in the table illustrated in Fig. 12, colors are assigned priority levels for the chart sheet CP2 and the chart sheet CP4. That is, for the chart sheet CP2, the color K is assigned "C" and the other colors, namely, the colors Y, M, and C, are assigned "B". For the chart sheet CP4, the color K is assigned "A".

In the fourth specific example, the chart sheet CP2 and the chart sheet CP4 are analysis targets. More specifically, in the fourth specific example, the chart sheet CP2 is in the colors Y, M, C, and K in whole while the chart sheet CP4 is in the color K in whole. Therefore, the chart sheet CP4 is referred to as the chart sheet CP4 in color K in whole in the following description.

Horizontal unevenness is assigned "A" for the chart sheet CP2, and vertical unevenness is assigned "A" for the chart sheet CP4 in color K in whole. Regarding dots/streaks, the color K is overlapping for the chart sheet CP2 and the chart sheet CP4 in color K in whole while the other colors are only for the chart sheet CP2.

Accordingly, in the fourth specific example, whether the diagnostic item of dots/streaks is common or not is determined on a color-by-color basis.

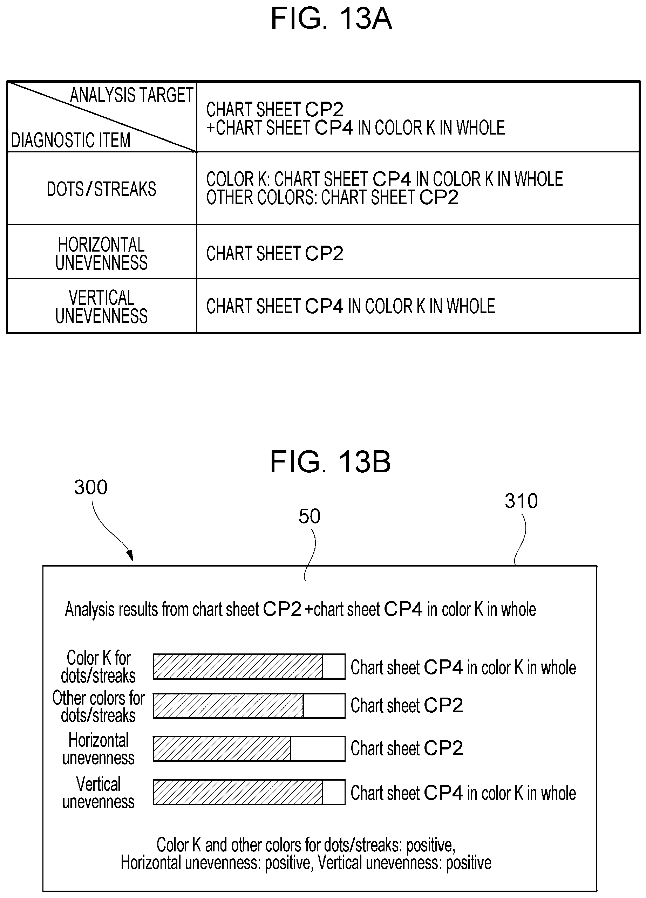

Figs. 13A and 13B are diagrams for explaining the fourth specific example, where Fig. 13A is a table for explaining diagnostic items for which the generation screen 50 showing diagnostic results is generated and Fig. 13B is a diagram for explaining the generation screen 50 displayed on the display device 310 of the user terminal 300. For example, Fig. 13A corresponds to Fig. 8B for explaining the first specific example, and Fig. 13B corresponds to Fig. 9B for explaining the first specific example.

As illustrated in Fig. 13A, in the fourth specific example, for the diagnostic item of dots/streaks, a diagnostic result obtained from the chart sheet CP4 in color K in whole is used for the color K, and a diagnostic result obtained from the chart sheet CP2 is used for the other colors. As described above, a color common to the chart sheet CP2 and the chart sheet CP4 in color K in whole is present, and the priority levels assigned to the common color are used to generate the generation screen 50.

For horizontal unevenness, a diagnostic result obtained from the chart sheet CP2 is used, and for vertical unevenness, a diagnostic result obtained from the chart sheet CP4 in color K in whole is used.

As illustrated in Fig. 13B, on the generation screen 50 in the fourth specific example, the chart name "chart sheet CP4 in color K in whole" is displayed for the color K for dots/streaks, and the chart name "chart sheet CP2" is displayed for the other colors for dots/streaks.

As illustrated in Fig. 13B, the analysis results obtained from the chart sheet CP2 and the chart sheet CP4 in color K in whole indicate that a positive result is obtained for the color K and the other colors for dots/streaks, a positive result is obtained for horizontal unevenness, and a positive result is obtained for vertical unevenness.

A fifth specific example will now be described.

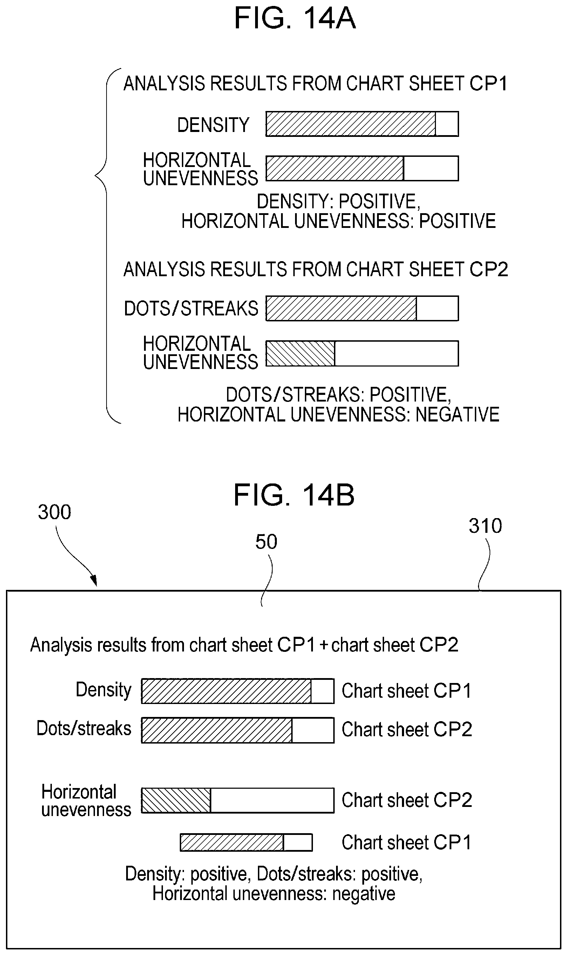

Figs. 14A and 14B are diagrams for explaining the fifth specific example, where Fig. 14A is a diagram illustrating analysis results and Fig. 14B is a diagram for explaining the generation screen 50 displayed on the display device 310 of the user terminal 300. Figs. 14A and 14B correspond to Figs. 9A and 9B for explaining the first specific example.

As illustrated in Fig. 14A, in the fifth specific example, analysis results obtained from the chart sheet CP1 and the chart sheet CP2 are indicated as in Fig. 9A.

As illustrated in Fig. 14B, in the fifth specific example, display for horizontal unevenness is different from that in Fig. 9B. That is, display for the chart sheet CP2 is in a normal size while display for the chart sheet CP1 is in a size smaller than the normal size.

More specifically, for horizontal unevenness, which is an overlapping diagnostic item, an analysis result obtained from one of the chart sheet CP1 or the chart sheet CP2 is displayed in the first specific example, but the fifth specific example is different from this. That is, for the overlapping diagnostic item, analysis results obtained from both of the chart sheet CP1 and the chart sheet CP2 are displayed. More specifically, the priority level of horizontal unevenness is higher for the chart sheet CP2 and lower for the chart sheet CP1. Therefore, in the fifth specific example, an analysis result obtained from the chart sheet CP2 for which the priority level is high is displayed in a large size and that obtained from the chart sheet CP1 for which the priority level is low is displayed in a small size so as to be distinguishable from each other by size. As described above, analysis results may be distinguished from each other by, for example, color or density instead of size.

On the generation screen 50 in the fifth specific example, the chart names "chart sheet CP1" and "chart sheet CP2" are displayed for horizontal unevenness.

### Second Exemplary Embodiment - not forming part of the claimed invention.

A second exemplary embodiment will now be described.

First, a functional configuration of the CPU 11a of the server apparatus 200 according to the second exemplary embodiment will be described.

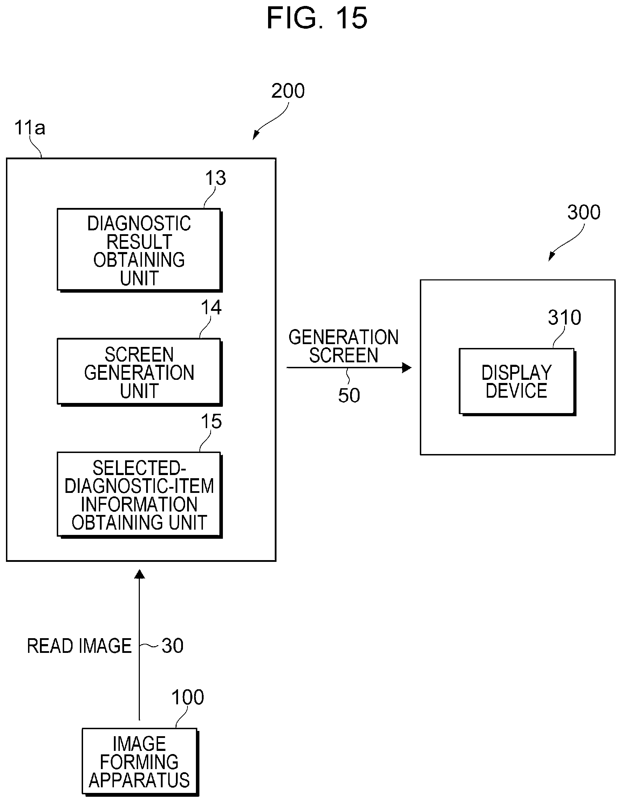

Fig. 15 is a block diagram for explaining the functional configuration of the CPU 11a of the server apparatus 200 according to the second exemplary embodiment and also illustrates the image forming apparatus 100 and the user terminal 300 for convenience of explanation.

As illustrated in Fig. 15, the CPU 11a includes the diagnostic result obtaining unit 13, the screen generation unit 14, and a selected-diagnostic-item information obtaining unit 15.

The diagnostic result obtaining unit 13 illustrated in Fig. 15 obtains diagnostic results that are the results of diagnostics performed on the read image 30 transmitted from the image forming apparatus 100. The diagnostics is performed for each of the diagnostic items determined in advance in accordance with the chart image 61 (see Fig. 1) included in the read image 30. Therefore, the diagnostic result obtaining unit 13 obtains a diagnostic result for each of the predetermined diagnostic items and performs a process.

The screen generation unit 14 illustrated in Fig. 15 generates a screen for notifying the user of the results of diagnostics performed on the basis of the obtained read image 30. The generated screen, which is the generation screen 50, is transmitted from the server apparatus 200 to the user terminal 300 and displayed on the display device 310 of the user terminal 300 to thereby notify the user of the diagnostic results.

The selected-diagnostic-item information obtaining unit 15 obtains information about a selected diagnostic item that is a diagnostic item selected by the user from among the plural diagnostic items for the chart image 61 formed on the chart sheet CP.

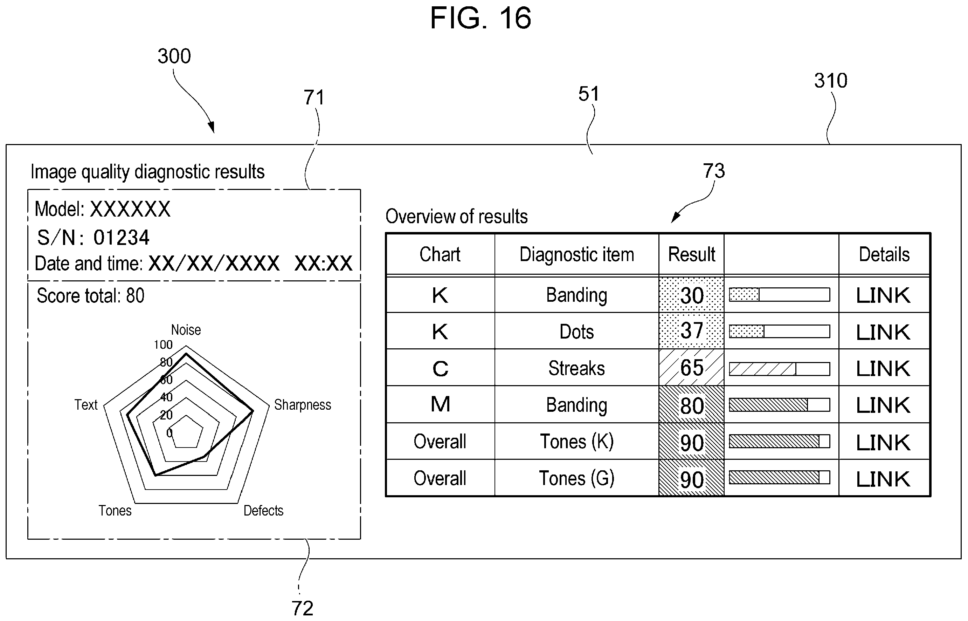

Fig. 16 is a diagram for explaining a first generation screen 51. The first generation screen 51 is one type of the generation screen 50 generated by the screen generation unit 14 (see Fig. 15).

The first generation screen 51 illustrated in Fig. 16 is a screen that shows image quality diagnostic results and is displayed on the display device 310 of the user terminal 300. More specifically, the first generation screen 51 includes a region 71 in which a model, a serial number, and a date and time are displayed, a region 72 in which a score total and a radar chart are displayed as a summary of diagnostic results, and a region 73 in which an overview of the results are displayed.

The radar chart in the region 72 is a regular polygonal graph showing an overall trend of five items, namely, noise, sharpness, defects, tones, and text. According to the radar chart, defects and tones are given relatively low evaluations.

In the region 73 of the first generation screen 51, a table that includes items, namely, "chart", "diagnostic item", "result", and "details", arranged in this order in the columns is displayed. In the rows, problem descriptions are arranged. In the region 73, six problem descriptions are displayed.

As the item "chart" in the region 73, "K", "C", "M", and "overall" are indicated as chart information corresponding to defects and tones that are given low evaluations described above. That is, in the region 73 of the first generation screen 51, diagnostic results from these four charts are indicated.

As the item "diagnostic item" in the region 73, among diagnostic items determined in advance for each of the analyzed charts, a diagnostic item for which the problem description is to be presented is indicated. That is, for the chart "K", diagnostic items of "banding" and "dots" are indicated as problem descriptions. Diagnostic items are further indicated as problem descriptions, that is, "streaks" is indicated for the chart "C", "banding" is indicated for the chart "M", and "tones (K)" and "tones (G)" are indicated for the chart "overall".

As the item "result" in the region 73, information indicating diagnostic results from the charts are indicated. More specifically, as the item "result", numbers and horizontal bars are displayed. The numbers are numerical values that are values indicating results calculated with a predetermined method, and the horizontal bars are displayed in lengths corresponding to the respective numerical values.

More specifically, the problem descriptions are arranged from the top to the bottom in accordance with the numerical values indicated as the item "result". That is, in the region 73 of the first generation screen 51, the problem descriptions are displayed in an order that is a descending order of possibility of being a cause of a problem in image quality of the chart.

As the item "details" in the region 73, an operation region that is a region for switching, in response to a user operation, to another screen showing detailed information and that includes text "LINK" is displayed.

The user can grasp the overview of the diagnostic results by confirmation on the first generation screen 51. When the user is concerned about a chart or a diagnostic item displayed in the region 73, the user can view more detailed information by an operation on a corresponding operation region in the region 73.

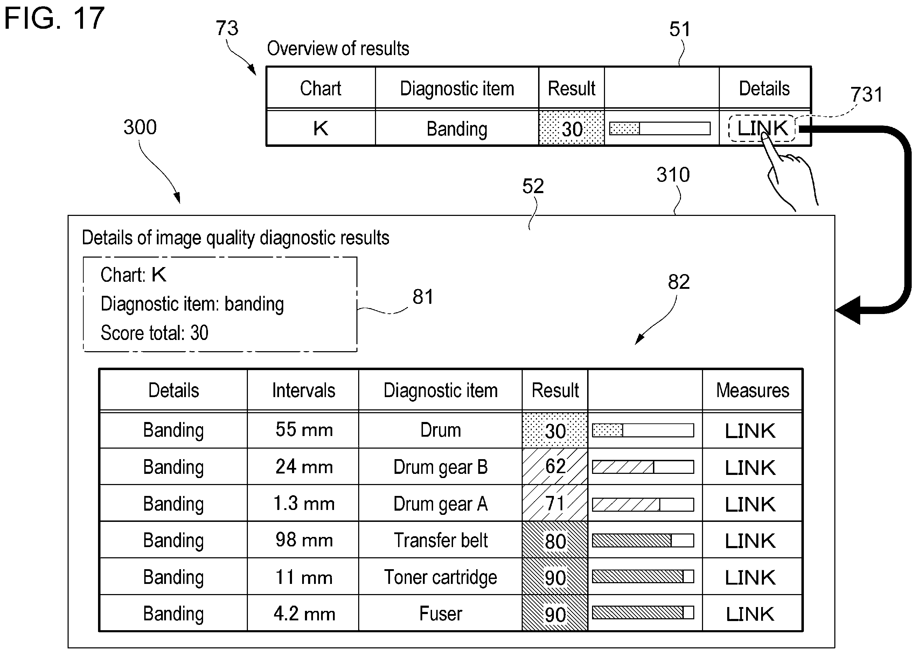

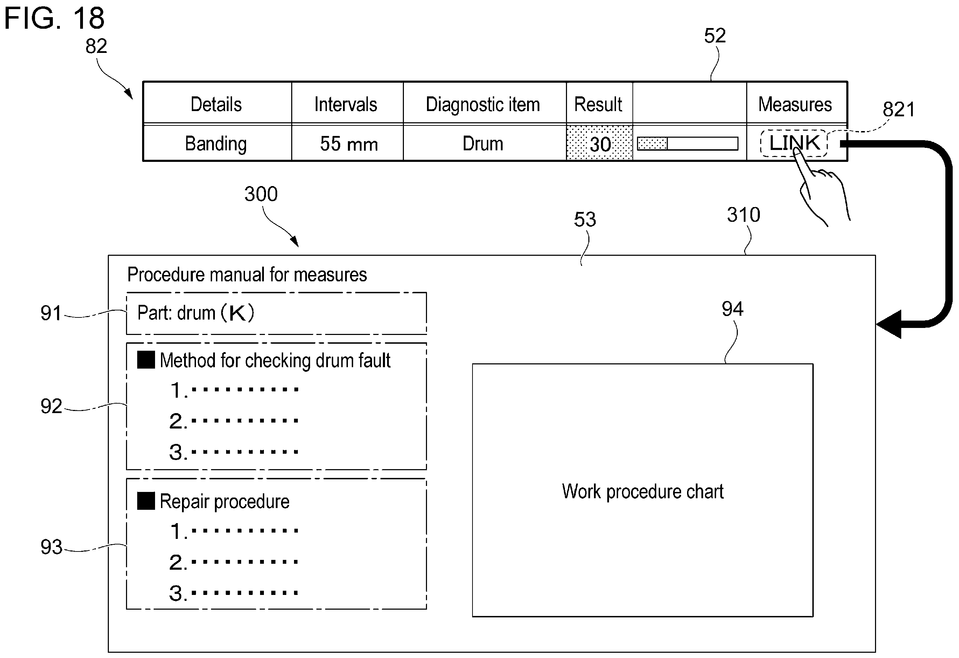

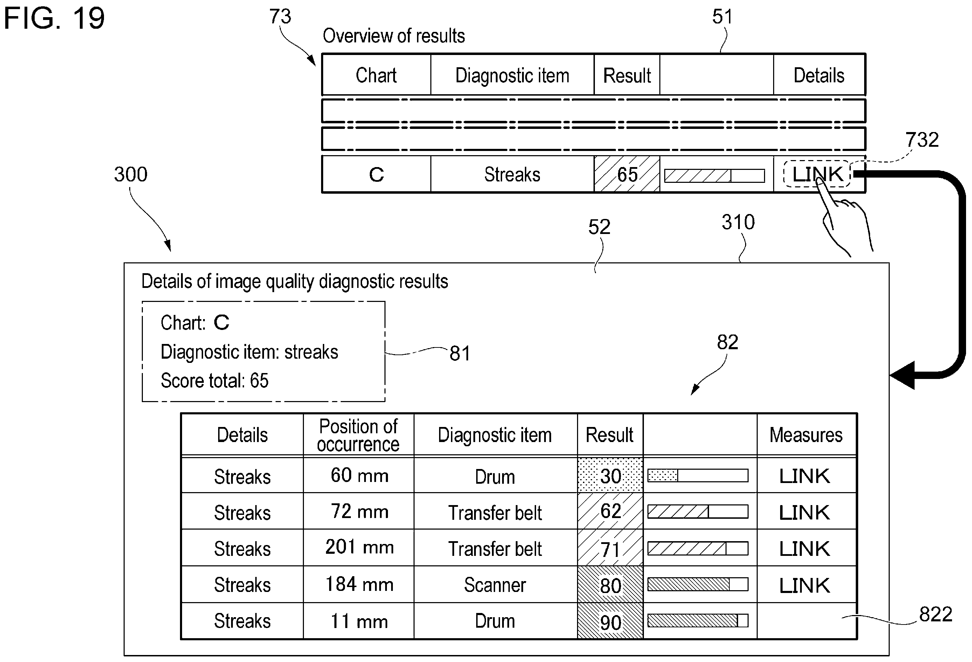

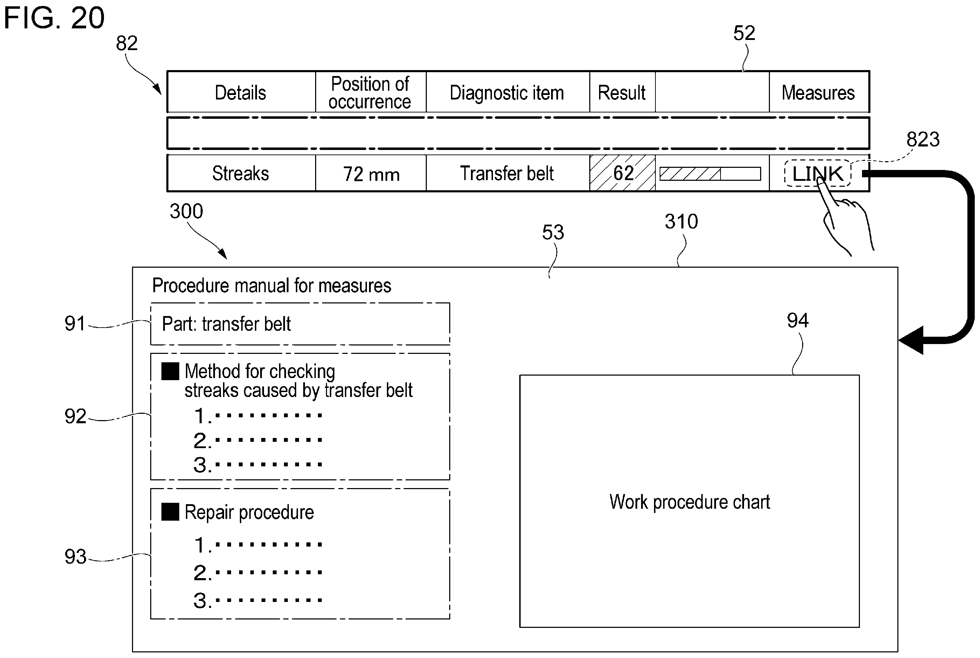

Examples of screen transitions from the first generation screen 51 will now be described. A first screen transition example will be described with reference to Fig. 17 and Fig. 18, and a second screen transition example will be described with reference to Fig. 19 and Fig. 20.

Fig. 17 is a diagram for explaining a second generation screen 52 in the first screen transition example. The second generation screen 52 is one type of the generation screen 50 generated by the screen generation unit 14 (see Fig. 15).

The second generation screen 52 illustrated in Fig. 17 is a screen that shows the details of image quality diagnostic results and is an example screen to which a transition from the first generation screen 51 occurs in response to the user operating an operation region 731 in the region 73 of the first generation screen 51.

More specifically, the second generation screen 52 is a screen displayed in response to the user operating the operation region 731 in the region 73 corresponding to the diagnostic item "banding" for the chart "K" on the first generation screen 51 displayed on the display device 310. For example, when the user viewing the first generation screen 51 is concerned about banding and operates the operation region 731, the second generation screen 52 is displayed. That is, on the second generation screen 52, plural malfunctioning portion candidates associated with "banding" that is the diagnostic item corresponding to the operated operation region 731 are displayed.

The diagnostic item "banding" for the chart "K" on the first generation screen 51 is an example of a selected diagnostic item that is a diagnostic item selected by the user.

The second generation screen 52 illustrated in Fig. 17 includes a region 81 in which information in the region 73 in a portion operated on the first generation screen 51 that is a transition source is displayed and a region 82 in which the details of results are displayed.

In the region 81 of the second generation screen 52, "chart: K", "diagnostic item: banding", and "score total: 30" are displayed. These are problem descriptions identified with the operation region 731 of the first generation screen 51.

In the region 82 of the second generation screen 52, a table that includes items, namely, "details", "intervals", "diagnostic item", "result", and "measures", arranged in this order in the columns is displayed. In the rows, malfunctioning portion candidates for "chart: K" and "diagnostic item: banding" are arranged.

As the item "details" in the region 82, "banding" is displayed as in the region 81.

As the item "intervals" in the region 82, 55 mm, 24 mm, 1.3 mm, 98 mm, 11mm, and 4.2 mm are displayed as intervals of banding. The "intervals" are intervals that are analysis results and are measured for the chart K.

As the item "diagnostic item" in the region 82, malfunctioning portion candidates corresponding to "intervals" are displayed. That is, relationships between "intervals" and malfunctioning portions are determined in advance and retained by the server apparatus 200 in, for example, the ROM 11c (see Fig. 2) as data. That is, malfunctioning portion candidates are displayed as "diagnostic item" on the basis of data indicating that, for example, a drum is a malfunctioning portion candidate in a case of intervals of 55 mm and a drum gear B is a malfunctioning portion candidate in a case of intervals of 24 mm.

As the item "result" in the region 82, as information indicating diagnostic results from the chart K, numbers that indicate numerical values calculated with a predetermined method and horizontal bars in lengths corresponding to the respective numerical values are displayed.

More specifically, the calculated numerical values are displayed as numbers and are also used to determine the display form of geometric shapes, namely, the horizontal bars. Although geometric shapes having shapes corresponding to the numerical values are used in Fig. 17, the display form is not limited to this, and a display form in which, for example, pieces of text, such as "high" and "low", corresponding to the numerical values are used and displayed in colors corresponding to the numerical values may be employed. In this display form, for example, "high" is displayed in red while "low" is displayed in blue.

For the item "result", colors are used in accordance with the magnitudes of the numerical values by taking into consideration visibility of the user. For example, when a numerical value is less than or equal to 40, the numerical value and the horizontal bar are displayed in red that is a color highly visible to the user, when a numerical value is greater than 40 and less than or equal to 70, the numerical value and the horizontal bar are displayed in a color, such as yellow, other than red, and when a numerical value is greater than 70, the numerical value and the horizontal bar are displayed in a different color, such as green. Therefore, the rows are classified into three groups, namely, the first row, a group of the second and third rows, and a group of the fourth to sixth rows, in accordance with the numerical values, and the three groups are color-coded in different colors.

The numbers displayed as the item "result" are used to determine the order in which malfunctioning portion candidates are arranged in the rows. The malfunctioning portion candidates in the region 82 are displayed in an order that indicates an order of priority of measures to be taken for improving the image quality of the chart image. The numbers displayed as the item "result" can be regarded as priority levels.

The number for the uppermost malfunctioning portion candidate is "30" and the number for the lowermost malfunctioning portion candidate is "90". As the number is smaller, the malfunctioning portion candidate is considered to be more likely to be a cause of the problem and is displayed in a higher row.

Note that the malfunctioning portion candidates need not be arranged in the rows in an order according to the numbers displayed as the item "result" and may be arranged, for example, in descending order or ascending order of "diagnostic item".

As the numbers displayed as the item "result", values indicating the results of faulty-portion diagnostics performed on the basis of the chart K and print conditions used when the chart K is formed on the chart sheet CP (see Fig. 1) can be used. As the numbers displayed as the item "result", values corresponding to the user can be used.

As the item "measures" in the region 82, an operation region that is a region for switching, in response to a user operation, to another screen showing a measure and that includes text "LINK" is displayed.

The user can grasp the details of the diagnostic results by confirmation on the second generation screen 52, and when the user wants to check a measure, the user can perform an operation on a corresponding operation region in the region 82, which causes switching to a third generation screen 53 described below, which is a screen displaying a measure.

Fig. 18 is a diagram for explaining the third generation screen 53 in the first screen transition example. The third generation screen 53 is one type of the generation screen 50 generated by the screen generation unit 14 (see Fig. 15).

The third generation screen 53 illustrated in Fig. 18 is a screen that shows a procedure manual for measures that is a procedure manual including a description of a measure and is an example screen to which a transition from the second generation screen 52 occurs in response to the user operating an operation region 821 in the region 82 of the second generation screen 52.

The operation region 821 is an example of a region for providing information that leads to the procedure manual including a description of the measure.

More specifically, the third generation screen 53 is a screen displayed in response to the user operating the operation region 821 in the region 82 corresponding to the diagnostic item "drum" on the second generation screen 52 displayed on the display device 310.

The third generation screen 53 illustrated in Fig. 18 includes a region 91 in which information in the region 82 in a portion operated on the second generation screen 52 that is a transition source is displayed, a region 92 in which a method for checking a drum fault is displayed, a region 93 in which a repair procedure is displayed, and a region 94 in which a work procedure chart or a procedure manual is displayed.

In the region 91 of the third generation screen 53, "part: drum (K)" is displayed. This is information corresponding to the operation region 821 of the second generation screen 52.

Information displayed in the regions 92 to 94 of the third generation screen 53 is changed to recommended information in accordance with plural problem states. That is, from configuration information about the image forming apparatus 100, information not related to problems is excluded. Information to be referred to can be dynamically determined from the diagnostic results.

Information displayed in the regions 92 to 94 can be updated.

As information displayed in the regions 92 to 94, useful information, such as the rate of improvement, a time taken to take measures, and the difficulty level of measures, may be added.

The second screen transition example will now be described.

Fig. 19 is a diagram for explaining the second generation screen 52 in the second screen transition example and corresponds to Fig. 17 illustrating the first screen transition example. Descriptions of portions in Fig. 19 common to Fig. 17 may be omitted.

The second generation screen 52 illustrated in Fig. 19 is an example screen to which a transition from the first generation screen 51 occurs in response to the user operating an operation region 732 in the region 73 of the first generation screen 51.

For example, when the user viewing the first generation screen 51 understands that a negative result is obtained for banding and is not concerned about banding upon use, but the user is concerned about streaks and operates the operation region 732, the second generation screen 52 illustrated in Fig. 19 is displayed.

In the region 82 of the second generation screen 52 illustrated in Fig. 19 in which the details of results are displayed, in terms of the item "measures", a region 822 that does not include text "LINK" is present. This region is not an operation region from which a transition to a screen occurs in response to an operation. That is, "drum" which is a malfunctioning portion candidate, has a numerical value 90 as "result" and is less likely to be a cause of the problem, and therefore, a transition to the third generation screen 53 is kept from occurring.

As described above, the numerical value displayed as "result" is used to determine whether to display a region that allows a transition to the next screen.

Fig. 20 is a diagram for explaining the third generation screen 53 in the second screen transition example and corresponds to Fig. 18 illustrating the first screen transition example. Descriptions of portions in Fig. 20 common to Fig. 18 may be omitted.

The third generation screen 53 illustrated in Fig. 20 is an example screen to which a transition from the second generation screen 52 occurs in response to the user operating an operation region 823 in the region 82 of the second generation screen 52.

In the region 91 of the third generation screen 53 illustrated in Fig. 20, "part: transfer belt" is displayed. The region 92 is a region in which a method for checking streaks caused by the transfer belt is displayed.

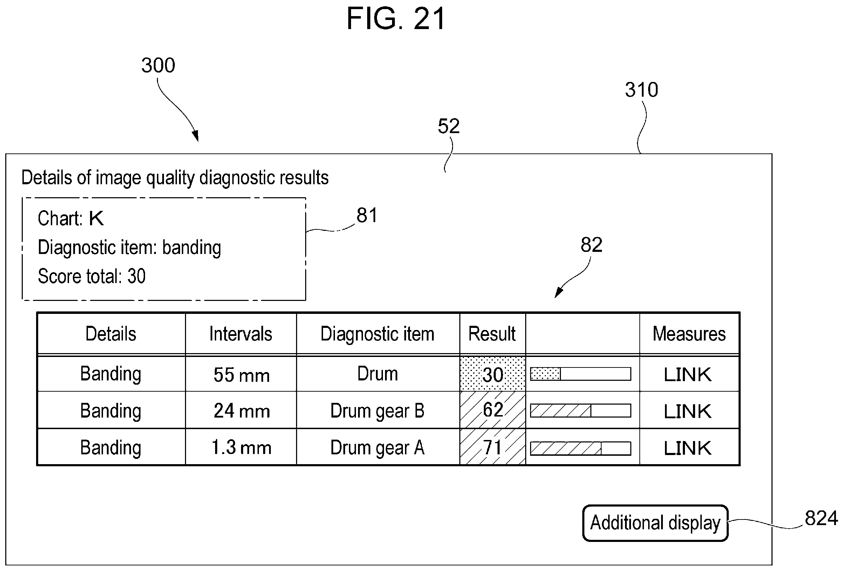

A modification of the second generation screen 52 will be described with reference to Fig. 21.

Fig. 21 is a diagram for explaining the modification of the second generation screen 52 and corresponds to the second generation screen 52 illustrated in Fig. 17.

In the modification illustrated in Fig. 21, in the region 82 in which malfunctioning portion candidates are displayed in an order that indicates an order of priority, all of the malfunctioning portion candidates are not displayed. That is, only candidates given high priority are displayed, and an operation part 824 for additional display is displayed. In response to the user operating the operation part 824, candidates not displayed on the second generation screen 52 are displayed.

As described above, candidates given high priority are displayed on the second generation screen 52 without an operation of the operation part 824 while candidates given low priority are not displayed on the second generation screen 52 unless the operation part 824 is operated. As described above, the order of priority is based on the numerical values displayed as the item "result". Therefore, the numerical values are used to determine whether to display malfunctioning portion candidates in response to a user operation or without a user operation.

The foregoing description of the exemplary embodiments of the present disclosure has been provided for the purposes of illustration and description. It is not intended to be exhaustive or to limit the disclosure to the precise forms disclosed. Obviously, many modifications and variations will be apparent to practitioners skilled in the art. The embodiments were chosen and described in order to best explain the principles of the disclosure and its practical applications, thereby enabling others skilled in the art to understand the disclosure for various embodiments and with the various modifications as are suited to the particular use contemplated. It is intended that the scope of the disclosure be defined by the following claims.

## Claims

1. An information processing system (200) configured to perform diagnostics on image forming apparatuses (100) comprising:
a processor (11a) configured to:
obtain a diagnostic result for each of a plurality of predetermined diagnostic items the diagnostic items being determined in advance in accordance with a chart image (61) included in an image (30) read by the image forming apparatus, the diagnostic items respectively related to different image quality defects; **characterized in that** :
when for at least one diagnostic item among the plurality of diagnostic items which is an overlapping diagnostic item appearing on more than one of the chart images, a plurality of diagnostic results are respectively obtained based on a plurality of chart images which are different from each other and a respective priority level is associated with each diagnostic item on the basis of each chart image, the processor is configured to generate a screen on which either:
a) only one of the plurality of diagnostic results associated with the highest priority is displayed; or
b) on which a diagnostic result obtained based on the plurality of diagnostic results, appropriately weighted on the basis of the priority level, is displayed.

2. The information processing system according to claim 1 option b), wherein:
the display is determined from the plurality of diagnostic results in accordance with a ratio between the priority levels for the plurality of chart images.

3. The information processing system according to claim 2, wherein:
the ratio between the priority levels is changed when a diagnostic result obtained from one of the plurality of chart images satisfies a predetermined condition.

4. The information processing system according to claim 1, wherein:
when a diagnostic result obtained from one of the plurality of chart images satisfies a predetermined condition, the display is determined by using a diagnostic result obtained from another one of the plurality of chart images regardless of a ratio between the priority levels.

5. The information processing system according to claim 1, wherein:
the display includes information indicating a chart image that is used to determine display about the one diagnostic item, among the plurality of chart images.

6. The information processing system according to claim 5, wherein:
when the one diagnostic item involves a color common to the plurality of chart images, the display includes information indicating an image that is used to determine display about the common color.

## Patentansprüche

1. Informationsverarbeitungssystem (200), das so konfiguriert ist, dass es Diagnosen an Bilderzeugungsvorrichtungen (100) durchführt, umfassend:
einen Prozessor (11a), der so konfiguriert ist, dass er:
ein Diagnoseergebnis für jedes von mehreren vorbestimmten Diagnoseelementen erhält, wobei die Diagnoseelemente im Voraus in Übereinstimmung mit einem Diagrammbild (61), das in einem Bild (30), das von der Bilderzeugungsvorrichtung gelesen wird, enthalten ist, bestimmt werden, wobei sich die Diagnoseelemente jeweils auf unterschiedliche Fehler in der Bildqualität beziehen;
**dadurch gekennzeichnet, dass**:
wenn für mindestens ein Diagnoseelement unter den mehreren Diagnoseelementen, das ein überlappendes Diagnoseelement ist, das auf mehr als einem der Diagrammbilder erscheint, mehrere Diagnoseergebnisse jeweils auf der Grundlage mehrerer Diagrammbilder, die sich voneinander unterscheiden, erhalten werden und eine jeweilige Prioritätsstufe mit jedem Diagnoseelement auf der Grundlage jedes Diagrammbildes verknüpft ist, der Prozessor so konfiguriert ist, dass er einen Bildschirm erzeugt, auf dem entweder:
a) nur eines von den mehreren Diagnoseergebnissen, die mit der höchsten Priorität verknüpft sind, angezeigt wird; oder
b) auf dem ein Diagnoseergebnis, das auf der Grundlage der mehreren Diagnoseergebnisse erhalten wird und auf der Grundlage der Prioritätsstufe angemessen gewichtet wird, angezeigt wird.

2. Informationsverarbeitungssystem nach Anspruch 1, Option b), wobei:
die Anzeige aus den mehreren Diagnoseergebnissen in Übereinstimmung mit einem Verhältnis zwischen den Prioritätsstufen für die mehreren Diagrammbilder bestimmt wird.

3. Informationsverarbeitungssystem nach Anspruch 2, wobei:
das Verhältnis zwischen den Prioritätsstufen geändert wird, wenn ein Diagnoseergebnis, das aus einem von den mehreren Diagrammbildern erhalten wird, eine vorbestimmte Bedingung erfüllt.

4. Informationsverarbeitungssystem nach Anspruch 1, wobei:
wenn ein Diagnoseergebnis, das aus einem von den mehreren Diagrammbildern erhalten wird, eine vorbestimmte Bedingung erfüllt, die Anzeige durch Verwenden eines Diagnoseergebnisses, das aus einem anderen von den mehreren Diagrammbildern erhalten wird, unabhängig von einem Verhältnis zwischen den Prioritätsstufen bestimmt wird.

5. Informationsverarbeitungssystem nach Anspruch 1, wobei:
die Anzeige Informationen enthält, die ein Diagrammbild angeben, das verwendet wird, um Anzeige über das eine Diagnoseelement unter den mehreren Diagrammbildern zu bestimmen.

6. Informationsverarbeitungssystem nach Anspruch 5, wobei:
wenn das eine Diagnoseelement eine Farbe, die den mehreren Diagrammbildern gemeinsam ist, beinhaltet, die Anzeige Informationen, die ein Bild angeben, das verwendet wird, um Anzeige über die gemeinsame Farbe zu bestimmen, enthält.

## Revendications

1. Système de traitement d'informations (200) configuré pour effectuer des diagnostics sur des appareils de formation d'images (100) comprenant :
un processeur (11a) configuré pour :
obtenir un résultat de diagnostic pour chacun d'une pluralité d'éléments de diagnostic prédéterminés, les éléments de diagnostic étant déterminés à l'avance conformément à une image de tableau (61) incluse dans une image (30) lue par l'appareil de formation d'images, les éléments de diagnostic étant respectivement liés à différents défauts de qualité d'image ;
**caractérisé en ce que** :
lorsque pour au moins un élément de diagnostic parmi la pluralité d'éléments de diagnostic qui est un élément de diagnostic de chevauchement apparaissant sur plus d'une des images de tableau, une pluralité de résultats de diagnostic sont respectivement obtenus sur la base d'une pluralité d'images de tableau qui sont différentes les unes des autres et un niveau de priorité respectif est associé à chaque élément de diagnostic sur la base de chaque image de tableau, le processeur est configuré pour générer un écran sur lequel soit :
a) un seul de la pluralité de résultats de diagnostic associés à la priorité la plus élevée est affiché ; ou
b) sur lequel un résultat de diagnostic obtenu sur la base de la pluralité de résultats de diagnostic, pondéré de manière appropriée sur la base du niveau de priorité, est affiché.

2. Système de traitement d'informations selon la revendication 1 option b), dans lequel :
l'affichage est déterminé à partir de la pluralité de résultats de diagnostic conformément à un rapport entre les niveaux de priorité pour la pluralité d'images de tableau.

3. Système de traitement d'informations selon la revendication 2, dans lequel :
le rapport entre les niveaux de priorité est modifié lorsqu'un résultat de diagnostic obtenu à partir d'une de la pluralité d'images de tableau satisfait une condition prédéterminée.

4. Système de traitement d'informations selon la revendication 1, dans lequel :
lorsqu'un résultat de diagnostic obtenu à partir d'une de la pluralité d'images de tableau satisfait une condition prédéterminée, l'affichage est déterminé en utilisant un résultat de diagnostic obtenu à partir d'une autre de la pluralité d'images de tableau, quel que soit un rapport entre les niveaux de priorité.

5. Système de traitement d'informations selon la revendication 1, dans lequel :
l'affichage inclut des informations indiquant une image de tableau qui est utilisée pour déterminer un affichage concernant l'un élément de diagnostic, parmi la pluralité d'images de tableau.

6. Système de traitement d'informations selon la revendication 5, dans lequel :
lorsque l'un élément de diagnostic implique une couleur commune à la pluralité d'images de tableau, l'affichage inclut des informations indiquant une image qui est utilisée pour déterminer un affichage concernant la couleur commune.
